(19) Europäisches Patentamt
European Patent Office
Office européen des brevets

(11) **EP 1 691 051 B1**

(12) **EUROPÄISCHE PATENTSCHRIFT**

(45) Veröffentlichungstag und Bekanntmachung des Hinweises auf die Patenterteilung:
**19.09.2007 Patentblatt 2007/38**

(51) Int Cl.:
*F01N 7/18* (2006.01)    *F16L 25/04* (2006.01)

(21) Anmeldenummer: **06405005.7**

(22) Anmeldetag: **10.01.2006**

(54) **Gekrümmtes dünnwandiges Rohr**

Curved thin-wall pipe

Tube à paroi mince courbé

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.01.2005 CH 482005**

(43) Veröffentlichungstag der Anmeldung:
**16.08.2006 Patentblatt 2006/33**

(73) Patentinhaber: **Scambia Industrial Developments AG**
**9494 Schaan (LI)**

(72) Erfinder: **Steenackers, Pieter Delfina**
**3001 Heverlee (BE)**

(74) Vertreter: **Heinen, Detlef et al**
**c/o A.Braun Braun Héritier Eschmann AG,**
**Holbeinstrasse 36-38**
**4051 Basel (CH)**

(56) Entgegenhaltungen:
**US-A- 2 770 313          US-A1- 2004 216 453**

**Beschreibung**

Die Erfindung betrifft ein gekrümmtes dünnwandiges Rohr gemäss dem unabhängigen Patentanspruch 1, sowie eine Komponente eines Abgassystems für Verbrennungsmotoren mit einem solchen gekrümmten dünnwandigen Rohr bzw. ein Abgassystem mit einem solchen gekrümmten dünnwandigen Rohr.

Gekrümmte Rohre findet man in vielen Anwendungsbereichen. Insbesondere sind sie bekannt bei Abgassystemen (Auspuffsystemen) von Verbrennungsmotoren von Kraftfahrzeugen. Im folgenden wird daher dieser Anwendungsbereich beispielhaft näher betrachtet, der Anwendungsbereich der Erfindung bezieht sich allerdings durchaus auch auf andere Gebiete. Bei Abgassystemen von Verbrennungsmotoren von Kraftfahrzeugen werden die bei der Verbrennung erzeugten und aus dem Motor austretenden Abgase mit Hilfe von Rohren zu dem Ort geführt, wo sie an die Umwelt abgegeben werden. Bei Personenkraftfahrzeugen werden die Abgase praktisch immer mit Hilfe von Rohren zum hinteren Ende des Fahrzeugs geführt, wobei die Rohre unter dem Fahrzeugboden verlaufen und am Fahrzeugboden befestigt sind. Die Rohre verlaufen dabei zwar grundsätzlich vom Motorraum vorne zum hinteren Ende des Fahrzeugs, müssen dabei aber mehr oder weniger bei jedem Fahrzeugtyp an verschiedenen Stellen in gekrümmten Bahnen unterhalb des Fahrzeugbodens geführt werden, um nicht mit anderen Fahrzeugkomponenten räumlich in Konflikt zu kommen

Der bei Kraftfahrzeugen vorherrschende Trend zum Sparen von Kraftstoffen bedingt, dass ein Fahrzeug so wenig Gewicht wie möglich hat, wobei bei der Reduktion von Geweicht bestimmte Randbedingungen (z.B. Sicherheitsaspekte) zu beachten sind, sodass nicht beliebig an allen Orten Gewicht reduziert werden kann. Insbesondere die Auspuffsysteme stellen allerdings nicht eine Fahrzeugkomponente dar, bei der man nicht an Gewicht sparen kann. Hier wäre es auch grundsätzlich möglich, Gewicht einzusparen, indem man dünnwandige Rohre verwendet.

Das Auspuffsystem soll ausserdem am Fahrzeugboden nur an wenigen Stellen befestigt sein. Andererseits ist es so, dass auf die Rohre des Auspuffsystems z.B. dann, wenn ein Fahrzeug in ein Loch fährt oder über eine Schwelle, Biegekräfte auf die Rohre wirken. Während diese Biegekräfte bei geradlinig verlaufenden Rohren auch bei der Verwendung von dünnwandigen Rohren, also von Rohren mit einer Wandstärke im Bereich von 0.3 mm bis 1.2 mm, insbesondere im Bereich von 0.5 mm bis 0.9 mm (beispielsweise von Rohren mit einer Wandstärke von 0.7 mm), gut aufgenommen werden können, können diese Biegekräfte speziell im Bereich einer Krümmung des Rohrs zu einer Materialermüdung oder sogar zu einem Reissen des Rohrs führen.

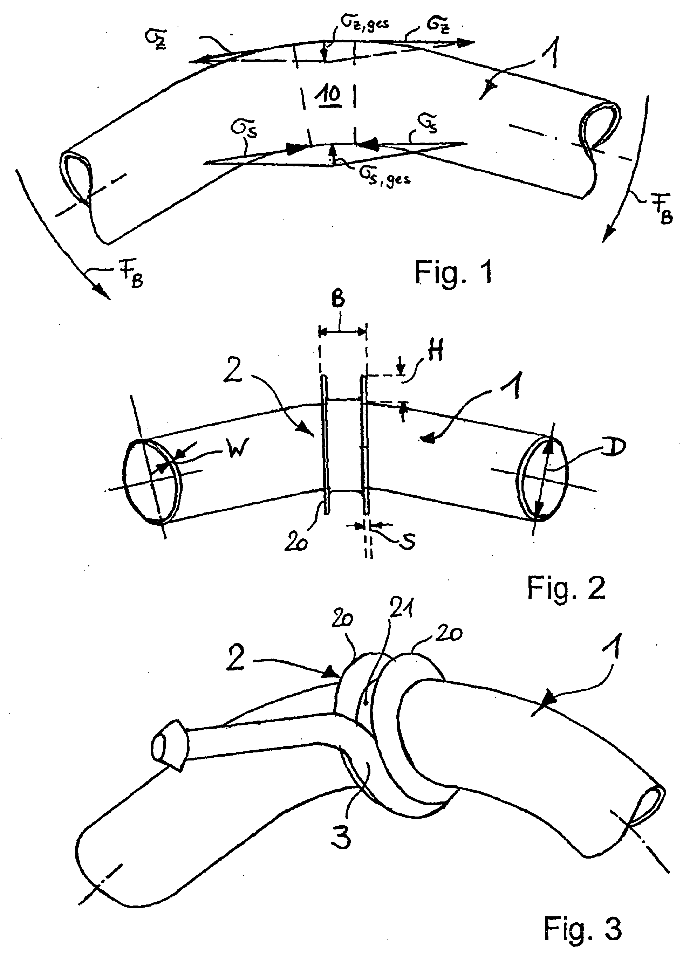

Beim Auftreten von Biegekräften entstehen nämlich Spannungen in der Rohrwand, wie dies beispielsweise aus Fig. 1 zu erkennen ist. Im folgenden wird dabei auf die Anordnung des Rohrs Bezug genommen, wie sie in Fig. 1 dargestellt ist. Beim Auftreten von Biegekräften - die hier durch die Pfeile $F_B$ dargestellt sind - entstehen im Bereich 10 der Krümmung des Rohrs 1 am radial am weitesten vom Krümmungsmittelpunkt entfernten Bereich in der Rohrwand (in Fig. 1 oben) Zugspannungen $\sigma_z$ (das Material der Rohrwand versucht sich zu strecken), während am radial am nächsten vom Krümmungsmittelpunkt entfernten Bereich der Rohrwand (in Fig. 1 unten) Schubspannungen $\sigma_s$ entstehen (das Material der Rohrwand versucht sich zu stauchen). Die jeweils aus den Zugspannungen resultierende Gesamtzugspannung $\sigma_{z,ges}$ und die resultierende Gesamtschubspannung $\sigma_{s,ges}$ führen dazu, dass ein dünnwandiges Rohr mit kreisförmigem Querschnitt versucht, sich zu einem Rohr mit z.B. elliptischem Querschnitt zu verformen. Besonders hohe Spannungen entstehen dabei in denjenigen Bereichen des Rohres, die in Fig. 1 nicht zu erkennen sind und die in Umfangsrichtung des Rohres jeweils um 90° gegenüber dem äusseren bzw. und inneren Bereich versetzt sind (diese Bereiche der Rohrwand würden in Fig. 1 vor bzw. hinter der Zeichenebene liegen). Diese Spannungen sind umso grösser, je grösser der Krümmungswinkel ist (bei ansonsten gleichem Krümmungsradius). Treten zu grosse Spannungen auf, kann es zu einer Materialermüdung oder sogar zu einem Reissen des Rohrs kommen.

Dieses Problem tritt bei Rohren, wie sie bisher in Auspuffsystemen von Kraftfahrzeugen verwendet werden, nicht auf, weil die Wandstärken dieser Rohre 1.5 mm und mehr betragen, sodass die Wandstärke dieser Rohre hinreichend gross ist, um den auftretenden Belastungen standzuhalten. Bei Rohren mit kleinerer Wandstärke nehmen jedoch die Spannungen in der Wand von Rohren - bei gleichen Biegekräften - sehr viel stärker als linear zu, sodass sich das Problem mit abnehmender Wandstärke verschärft. Rohre mit grösserer Wandstärke haben aber ein grösseres Gewicht, und seitens der Automobilindustrie besteht ein starker Wunsch, jedes Kilogramm an Gewicht zu reduzieren, wo immer das unter Beachtung der Randbedingungen (z.B. Sicherheitsaspekte, Komfort, etc.) möglich ist.

Zusammenfassend besteht somit einerseits der Wunsch, dünnwandige Rohre für die Auspuffsysteme zu verwenden, andererseits stehen diesem Wunsch die vorgenannten Probleme konträr entgegen, insbesondere im Hinblick darauf, dass ausserdem die Anzahl von Befestigungen am Boden nicht erhöht werden soll.

Hier setzt die vorliegende Erfindung an. Gemäss der Erfindung wird ein gekrümmtes dünnwandiges Rohr vorgeschlagen mit einer Wandstärke, die im Verhältnis zum Innendurchmesser des Rohrs im Bereich von

$$D/200 \leq W \leq D/40$$

liegt. Dabei bezeichnet D den Innendurchmesser des Rohrs und W die Wandstärke des Rohrs. Das Rohr ist im Bereich der Krümmung mit mindestens einem separaten Ring oder mit einem separaten Rohrstück versehen (möglich sind auch mehrere Ringe oder Rohrstücke), der bzw. das im Bereich der Krümmung das Rohr umgibt und mit dem Rohr verbunden ist.

Ein solcher Ring bzw. Rohrstück dient der Verstärkung des dünnwandigen Rohrs in dem - wie oben bereits erläutert - besonders empfindlichen Bereich der Krümmung. Die ohne besondere Massnahmen auftretenden grossen Spannungen im Material der Rohrwand bei einer Beanspruchung durch Biegekräfte werden auf diese Weise sehr stark reduziert bzw. eliminiert. Gleichzeitig tragen die einzelnen Ringe bzw. kurzen Rohrstücke bei weitem nicht so viel zum Gesamtgewicht des Auspuffsystems bei wie ein Rohr, das grundsätzlich über seine gesamte Länge in der üblichen Wandstärke ausgeführt ist. Speziell bei den Personenkraftfahrzeugen sind die Rohre der Auspuffsysteme ohnehin dort geradlinig ausgeführt, wo es möglich ist. Da dies aber eben nicht immer überall möglich ist, sind auch einige gekrümmte Bereiche vorhanden. Genau dort treten aber ohne besondere Massnahmen die hohen Spannungen auf, die durch die Ringe bzw. kurzen Rohrstücke, die dort mit dem Rohr verbunden sind, stark reduziert bzw. eliminiert werden. Dabei muss das Rohrstück bzw. der Ring - je nach Ausführungsart - nicht notwendigerweise über seine gesamte Länge, über die er das Rohr umgibt, mit dem Rohr verbunden sein.

Bei einem bevorzugten Ausführungsbeispiel des erfindungsgemässen Rohrs, welches speziell für den Bereich der Auspuffsysteme von Verbrennungsmotoren für Personenkraftfahrzeuge geeignet ist, hat das Rohr eine Wandstärke im Bereich von 0.3 mm bis 1.2 mm, insbesondere von 0.5 mm bis 0.9 mm.

Bei einem weiteren Ausführungsbeispiel des erfindungsgemässen Rohrs ist im Bereich der Krümmung des Rohrs ein Ring vorgesehen, der eine Breite aufweist, die im Bereich von

$$D/10 \leq B \leq 3D/10$$

liegt, wobei D den Innendurchmesser des Rohrs bezeichnet und B die Breite des Rings.

Bei einer Weiterbildung dieses Ausführungsbeispiels weist der Ring eine Höhe auf, die im Bereich von

$$D/10 \leq H \leq 3D/10$$

liegt, wobei D den Innendurchmesser des Rohrs bezeichnet und H die Höhe des Rings. Ringe mit diesen Abmessungen haben ein vergleichsweise geringes Eigengewicht, tragen aber sehr erheblich zur Reduktion bzw. Eliminierung von Spannungen im Material der Rohrwand im Bereich der Krümmung bei.

In weiterer Ausbildung kann des erfindungsgemässen Rohrs kann der Ring einen U-förmigen Querschnitt aufweisen mit einer Wandstärke im Bereich von

$$2W \leq S \leq 4W,$$

wobei W die Wandstärke des Rohrs bezeichnet und S die Wandstärke des Rings. Dies hat sich als besonders vorteilhaft erwiesen und spart Gewicht. Der Ring ist dabei vorzugsweise derart mit dem Rohr verbunden, dass die beiden Schenkel des U-förmigen Rings nach aussen vom Rohr weg weisen.

In dem zwischen den Schenkeln des U-förmigen Querschnitts entstehenden Zwischenraum zwischen den beiden nach aussen weisenden Schenkeln des Rings kann ein Befestigungselement angeordnet sein. Mit Hilfe dieses Befestigungselements kann das Rohr beispielsweise am Fahrzeugboden (Chassis) befestigt werden.

Bei einem anderen Ausführungsbeispiel des erfindungsgemässen Rohrs ist der Ring derart mit dem Rohr verbunden, dass die beiden Schenkel des U-förmigen Querschnitts nach innen zum Rohr hin weisen und mit dem Rohr verbunden sind. Wiederum bei einem anderen Ausführungsbeispiel des erfindungsgemässen Rohrs weist der Ring einen rechteckigen oder quadratischen Querschnitt auf. Insbesondere bei Ringen mit Hohlprofil (rechteckig oder quadratisch) ist dabei die Wandstärke des Rings im Verhältnis zur Wandstärke des Rohrs ähnlich ausgebildet wie bei dem Ring mit U-Profil (siehe oben).

Bei einem weiteren Ausführungsbeispiel kann der das Rohr am Ort der Krümmung umgebende Ring durch eine auf das Rohr klemmbare Schelle gebildet sein. Diese Schelle kann in einfacher Weise nach dem Biegen des Rohrs am Ort der Krümmung auf das Rohr montiert und anschliessend auf dem Rohr verklemmt werden, beispielsweise indem an der Schelle vorhandene Schrauben oder Muttern angezogen werden.

Ein weiterer Aspekt der Erfindung betrifft eine Komponente eines Abgassystems für Verbrennungsmotoren, z.B. einen Schalldämpfer, einen Katalysator, ein Partikelfilter, ein Auspuffelement, etc., bzw. ein Abgassystem, mit einem gekrümmten dünnwandigen Rohr wie es vorstehend beschrieben ist.

Weitere vorteilhafte Aspekte der Erfindung ergeben sich aus der nachfolgenden Beschreibung von Ausführungsbeispielen mit Hilfe der Zeichnung. Es zeigen:

Fig. 1 die bei einer Biegebeanspruchung im Bereich der Krümmung eines Rohrs entstehenden Zug- und Schubspannungen,

Fig. 2 ein Ausführungsbeispiel eines erfindungsgemässen dünnwandigen Rohrs mit einem Ring mit U-förmigem Querschnitt, der im Bereich der Krümmung des Rohrs mit dem Rohr verbunden ist,

Fig. 3 das Ausführungsbeispiel des erfindungsgemässen Rohrs aus Fig. 2 mit dem Ring im Bereich der Krümmung des Rohrs, jedoch zusätzlich mit einem Befestigungselement und

Fig. 4 ein Ausführungsbeispiel des erfindungsgemässen Rohrs, bei dem der Ring durch eine Schelle gebildet ist.

In Fig. 2 erkennt man ein Ausführungsbeispiel des erfindungsgemässen Rohrs 1 bei welchem im Bereich 10 der Krümmung (siehe Fig. 1) das Rohr mit einem Ring 2 versehen ist, der von aussen her mit dem Rohr verbunden ist. Der Ring 2 weist hier einen U-förmigen Querschnitt auf, was man am gezeigten Profil des Rings 2 erkennen kann. Der Ring 2 ist bei dem gezeigten Ausführungsbeispiel so auf dem Rohr 1 befestigt, dass die Schenkel 20 des U-förmigen Rings 2 nach aussen vom Rohr 1 weg weisen. Der Ring 2 kann beispielsweise durch Löten oder Punktschweissen mit dem Rohr 1 verbunden sein, er kann aber auch durch ein nicht-materialschlüssiges Verfahren, beispielsweise durch Aufpressen, mit dem Rohr 1 verbunden sein.

Der Ring 2 kann weist eine Breite B auf, die generell im Bereich von $D/10 \leq B \leq 3D/10$ liegt, wobei D den Innendurchmesser des Rohres 1 bezeichnet, also im Bereich von einem bis drei Zehnteln des Innendurchmessers D des Rohrs 1. Beispielsweise kann der Ring 2 für ein Rohr mit einem Innendurchmesser D von 50 mm eine Breite B von 10 mm aufweisen.

Die Höhe H des Rings 2 liegt generell im Bereich von $D/10 \leq H \leq 3D/10$, wobei D erneut den Innendurchmesser des Rohrs 1 bezeichnet. Für das Rohr 1 mit dem vorgenannten Innendurchmesser D von 50 mm kann der Ring 2 beispielsweise eine Höhe H von 10 mm aufweisen.

Die Wandstärke S des U-förmigen Rings 2 liegt generell im Bereich von $2W \leq S \leq 4W$, wobei W die Wandstärke des Rohrs 1 bezeichnet. Insbesondere kann bei einer Wandstärke W des Rohrs 1 von 0.7 mm die Wandstärke S des Rings 2 etwa 2 mm betragen. Wie bereits einleitend erwähnt, liegt die Wandstärke bei dünnwandigen Rohren für Auspuffsysteme von PKW allgemein im Bereich von 0.3 mm bis 1.2 mm, insbesondere im Bereich von 0.5 mm bis 0.9 mm.

Wie bereits vorstehend erwähnt, kann der Ring 2 auch - anders als in Fig. 2 gezeigt - beispielsweise mit den Schenkeln 20 nach innen zum Rohr 1 hin weisend mit dem Rohr 1 verbunden sein. Der Ring 2 ist dann beispielsweise an den freien Enden der Schenkel 20 mit dem Rohr 1 verbunden. Ebenso kann der Querschnitt des Rings beispielsweise auch quadratisch oder rechteckig sein. Auch kann anstelle eines Rings 2 im Bereich der Krümmung des Rohrs 1 ein kurzes separates Rohrstück vorgesehen sein, welches im Bereich der Krümmung das Rohr 1 umgibt. Dabei braucht dieses kurze Rohrstück nicht über seine gesamte Länge mit dem Rohr 1 verbunden sein, sondern es kann auch lediglich an seinen Endbereichen mit dem Rohr 1 verbunden sein.

In Fig. 3 ist das Rohr 1 mit dem (Verstärkungs-)Ring 2 mit den nach aussen vom Rohr 1 weg weisenden Schenkeln 20 entsprechend Fig. 2 dargestellt. Zusätzlich erkennt man in Fig. 3, dass ein Befestigungselement 3 vorgesehen ist, welches im Zwischenraum 21 zwischen den beiden Schenkeln 20 des Rings 2 angeordnet ist. Mit Hilfe dieses Befestigungselements 3 kann dann das Rohr 1 am Ort des Rings 2 mit dem Fahrzeugboden bzw. einem Gummi verbunden sein, der wiederum mit dem Fahrzeugboden selbst oder einer am Fahrzeugboden vorgesehenen Aufhängung verbunden ist. Dadurch ist das Rohr 1 an seiner im Hinblick auf Biegebeanspruchungen schwachen Stelle, nämlich der Krümmung, nicht nur durch den Ring 2 verstärkt, sondern auch noch zusätzlich fixiert, sodass es besonders gut auch stärkeren Biegebelastungen standhalten kann, wie sie beispielsweise beim Fahren in ein Loch oder über eine Schwelle auftreten können.

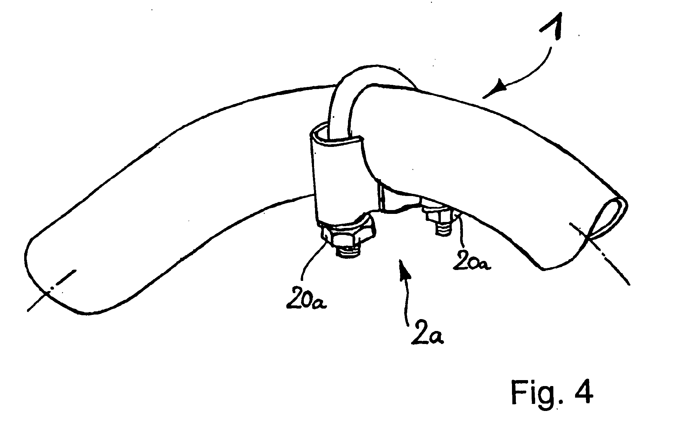

Fig. 4 zeigt ein Ausführungsbeispiel, bei welchem der Ring durch eine Schelle 2a gebildet wird. Eine solche Schelle 2a und deren Funktionsweise ist beispielsweise in dem Patent CH-A-677,817 beschrieben. Durch Anziehen der Muttern 20a kann die Schelle 2a auf dem Rohr 1 am Ort der Krümmung des Rohrs 1 verklemmt werden. In Bezug auf eine genauere Beschreibung der Schelle 2a und deren Funktionsweise wird an dieser Stelle auf die genannte CH-A-677,817 verwiesen, die hiermit ausdrücklich zum Bestandteil dieser Anmeldung erklärt wird.

In den vorstehend beschriebenen Ausführungsbeispielen ist jeweils nur ein Rohr 1 betrachtet worden. Es versteht sich, dass die vorstehenden Massnahmen auch für Komponenten von Auspuffsystemen gelten, wie beispielsweise Schalldämpfer, Katalysatoren, etc., die ausser dem Schalldämpfergehäuse oder Katalysatorgehäuse noch ein Stück Rohr umfassen, welches insbesondere auch Krümmungen aufweisen kann. An solchen Krümmungen von Rohren können ebenfalls die vorstehend beschriebenen Massnahmen zur Verstärkung des Rohrs getroffen werden. Das gilt sinngemäss auch für ganze Abgassysteme, die gekrümmte dünnwandige Rohre umfassen.

Im übrigen wird darauf verwiesen, dass die spezifische Anwendung im Bereich der Auspuffsysteme von Verbrennungsmotoren für Kraftfahrzeuge nur ein spezielles Anwendungsgebiet der Erfindung darstellen, die auch auf anderen Gebieten haben kann. Erwähnt sei hier beispielsweise die Verrohrung von Anlagen in der chemischen Industrie.

**Patentansprüche**

1. Gekrümmtes dünnwandiges Rohr (1) mit einer Wandstärke, die im Verhältnis zum Innendurchmesser des Rohrs im Bereich von

$$D/200 \leq W \leq D/40$$

liegt, wobei D der Innendurchmesser des Rohrs bezeichnet und W die Wandstärke des Rohrs, und wobei das Rohr im Bereich (10) der Krümmung mit mindestens einem separaten Ring (2) oder mit mindestens einem separaten Rohrstück versehen ist, der bzw. das im Bereich (10) der Krümmung das Rohr umgibt und mit dem Rohr verbunden ist.

2. Rohr nach Anspruch 1, bei welchem die Wandstärke (T) des Rohrs im Bereich von 0.3 mm bis 1.2 mm liegt, insbesondere im Bereich von 0.5 mm bis 0.9 mm.

3. Rohr nach einem der vorangehenden Ansprüche, bei welchem im Bereich (10) der Krümmung des Rohrs ein Ring (2) vorgesehen ist, der eine Breite aufweist, die im Bereich von

$$D/10 \leq B \leq 3D/10$$

liegt, wobei D den Innendurchmesser des Rohrs bezeichnet und B die Breite des Rings (2).

4. Rohr nach Anspruch 3, bei welchem der Ring eine Höhe aufweist, die im Bereich von

$$D/10 \leq H \leq 3D/10$$

liegt, wobei D den Innendurchmesser des Rohrs bezeichnet und H die Höhe des Rings (2).

5. Rohr nach einem der Ansprüche 3 oder 4, bei welchem der Ring (2) einen U-förmigen Querschnitt aufweist mit einer Wandstärke S im Bereich von

$$2W \leq S \leq 4W$$

liegt, wobei W die Wandstärke des Rohrs bezeichnet und S die Wandstärke des Rings (2).

6. Rohr nach Anspruch 5, bei welchem der Ring (2) derart mit dem Rohr verbunden ist, dass die beiden Schenkel (20) des U-förmigen Rings (2) nach aussen vom Rohr weg weisen.

7.  Rohr nach Anspruch 6, **dadurch gekennzeichnet, dass** im Zwischenraum (21) zwischen den beiden nach aussen vom Rohr weg weisenden Schenkeln (20) des U-förmigen Rings (2) ein Befestigungselement (3) angeordnet ist, mit welchem das Rohr befestigbar ist.

8.  Rohr nach Anspruch 5, bei welchem der U-förmige Ring (2) derart mit dem Rohr verbunden ist, dass die beiden Schenkel (20) nach innen zum Rohr hin weisen und mit dem Rohr verbunden sind.

9.  Rohr nach einem der Ansprüche 3 oder 4, bei welchem der Ring (2) einen rechteckigen oder quadratischen Querschnitt aufweist.

10. Rohr nach einem der vorangehenden Ansprüche, **dadurch gekennzeichnet, dass** der das Rohr (1) am Ort der Krümmung umgebende Ring durch eine auf das Rohr (1) klemmbare Schelle (2a) gebildet wird.

11. Komponente eines Abgassystems für Verbrennungsmotoren, z.B. Schalldämpfer, Katalysator, Partikelfilter, Auspuffelement, etc., mit einem gekrümmten dünnwandigen Rohr (1) gemäss einem der vorangehenden Ansprüche.

12. Abgassystem für Verbrennungsmotoren, mit einem gekrümmten dünnwandigen Rohr (1) gemäss einem der vorangehenden Ansprüche.

**Claims**

1.  Curved thin-wall pipe (1) having a wall thickness which, relative to the inner diameter of the pipe, is in the range of

$$D/200 \leq W \leq D/40$$

wherein D denotes the inner diameter of the pipe and W denotes the wall thickness of the pipe, and wherein in the area (10) of the curvature the pipe is provided with at least one separate ring (2) or with at least one separate piece of a pipe, which, in the area (10) of the curvature, surrounds the pipe and is connected to the pipe.

2.  Pipe according to claim 1, wherein the wall thickness (T) of the pipe is in the range of 0.3 mm to 1.2 mm, particularly in the range of 0.5 mm to 0.9 mm.

3.  Pipe according to any one of the preceding claims, wherein in the area (10) of the curvature of the pipe a ring (2) is provided having a width which is in the range of

$$D/10 \leq B \leq 3D/10,$$

wherein D denotes the inner diameter of the pipe and B denotes the width of the ring (2).

4.  Pipe according to claim 3, wherein the ring has a height which is in the range of

$$D/10 \leq H \leq 3D/10,$$

wherein D denotes the inner diameter of the pipe and H denotes the height of the ring (2).

5.  Pipe according to any one of claims 3 or 4, wherein the ring (2) has a U-shaped cross-section having a wall thickness S in the range of

$$2W \leq S \leq 4W,$$

wherein W denotes the wall thickness of the pipe and S denotes the wall thicknes of the ring (2).

6. Pipe according to claim 5, wherein the ring (2) is connected to the pipe such that both shanks (20) of the U-shaped ring (2) extend outwardly away from the pipe.

7. Pipe according to claim 6, **characterised in that** in the interspace (21) between both shanks (20) of the U-shaped ring (2) which extend outwardly away from the pipe there is arranged a fixation element (3) with which the pipe can be fixed.

8. Pipe according to claim 5, wherein the U-shaped ring (2) is connected to the pipe such, that both shanks (20) extend inwardly towards the pipe and are connected to the pipe.

9. Pipe according to any one of claims 3 or 4, wherein the ring (2) has a rectangular or square cross-section.

10. Pipe according to any one of the preceding claims, **characterised in that** the ring surrounding the pipe (1) at the location of the curvature is formed by a clip (2a) which can be clamped to the pipe (1).

11. Component of an exhaust system for combustion engines, e.g. muffler, catalyst, particle filter, exhaust system element, etc., having a curved thin-wall pipe (1) according to any one of the preceding claims.

12. Exhaust system for combustion engines, having a curved thin-wall pipe (1) according to any one of the preceding claims.

**Revendications**

1. Tube courbé à paroi mince (1) présentant une épaisseur de paroi, qui se situe dans une plage de

$$D/200 \leq W \leq D/40$$

par rapport au diamètre intérieur du tube, D désignant le diamètre intérieur du tube et W désignant l'épaisseur de la paroi du tube, et le tube étant pourvu, au niveau de la zone (10) de sa courbure, d'au moins une bague (2) séparée ou d'au moins un tronçon de tube séparé, qui entoure le tube dans la zone (10) de la courbure et est relié(e) au tube.

2. Tube selon la revendication 1, dans lequel l'épaisseur de paroi (T) du tube se situe dans une plage de 0.3 mm à 1.2 mm, en particulier dans une plage de 0.5 mm à 0.9 mm.

3. Tube selon l'une des revendications précédentes, dans lequel une bague (2) est prévue dans la zone (10) de courbure du tube, bague qui présente une largeur située dans une plage de

$$D/10 \leq B \leq 3D/10$$

D désignant le diamètre intérieur du tube, et B désignant la largeur de la bague (2).

4. Tube selon la revendication 3, dans lequel la bague présente une hauteur qui se situe dans une plage de

$$D/10 \leq H \leq 3D/10$$

D désignant le diamètre intérieur du tube, et H désignant la hauteur de la bague (2).

5. Tube selon l'une des revendications 3 ou 4, dans lequel la bague (2) présente une section transversale en forme de U et une épaisseur de paroi S située dans une plage de

$$2W \leq S \leq 4W$$

W désignant l'épaisseur de la paroi du tube, et S désignant l'épaisseur de la paroi de la bague (2).

6. Tube selon la revendication 5, dans lequel la bague (2) est reliée au tube d'une manière, telle que les deux branches (20) de la bague (2) en forme de U s'écartent du tube vers l'extérieur.

7. Tube selon la revendication 6, **caractérisé en ce qu'**un élément de fixation (3) est disposé dans l'espace intermédiaire (21) compris entre les deux branches (20) de la bague (2) en forme de U, qui sont dirigées vers l'extérieur, au loin du tube, élément à l'aide duquel le tube peut être fixé.

8. Tube selon la revendication 5, dans lequel la bague (2) en forme de U est reliée au tube d'une manière, telle que les deux branches (20) sont dirigées vers l'intérieur, vers le tube, et sont reliées au tube.

9. Tube selon l'une des revendications 3 ou 4, dans lequel la bague (2) présente une section transversale rectangulaire ou carrée.

10. Tube selon l'une des revendications précédentes, **caractérisé en ce que** la bague entourant le tube (1) à l'endroit de la courbure est constituée par un collier (2a) pouvant être serré sur le tube (1).

11. Composant d'un système de gaz d'échappement pour moteurs à combustion interne, par exemple silencieux, catalyseur, filtre à particules, élément de tube d'échappement, etc., comprenant un tube courbé à paroi mince (1) selon l'une des revendications précédentes.

12. Système de gaz d'échappement pour moteurs à combustion interne, comprenant un tube courbé à paroi mince (1) selon l'une des revendications précédentes.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- CH 677817 A